# EUROPÄISCHE PATENTANMELDUNG

(11) **EP 2 104 087 A1**
(43) Veröffentlichungstag der Anmeldung: **23.09.2009**
(21) Anmeldenummer: 09003148.5
(22) Anmeldetag: 04.03.2009
(51) Int. Cl.: G09F 7/02, A63F 9/12, G09B 1/36

(54) **Quaderförmiges Darstellungselement, Verfahren zu seiner Herstellung und Verwendung**

(30) Priorität: 04.03.2008 DE 102008012515
(71) Anmelder: Quantum Verlag GmbH, 52068 Aachen (DE)
(72) Erfinder: Harrenberg, Christina, 52076 Aachen (DE)
(74) Vertreter: Castell, Klaus

(57) **Zusammenfassung**

Die Erfindung betrifft ein quaderförmiges Darstellungselement mit mindestens einer Kontaktfläche mit glatten Seitenflächen und/oder einer glatten Deckfläche, die mit mindestens einem Zeichnungselement versehen sind. Ein zweiter Aspekt der Erfindung betrifft eine Anordnung aus mehreren quaderförmigen Darstellungselementen, z. B. zu einer Mauer oder einem Quader. Ein dritter Aspekt der Erfindung betrifft ein Verfahren zur Herstellung eines quaderförmigen Darstellungselementes. Ein vierter Aspekt betrifft ein Verfahren zur Verwendung eines quaderförmigen Darstellungselementes zur Darstellung von Sachverhalten.

## Beschreibung

Die Erfindung betrifft ein quaderförmiges Darstellungselement und Anordnungen aus mehreren quaderförmigen Darstellungselementen, ein Verfahren zu seiner Herstellung sowie ein Verfahren zu seiner Verwendung zur Darstellung von Sachverhalten.

Vorrichtungen und Verfahren zur Visualisierung von Sachverhalten in Form von flächigen Halteeinrichtungen sind seit langem hinlänglich bekannt. Dies können zum Beispiel Flip-Charts sein, bei denen Informationen direkt auf der flächigen Halteeinrichtung befestigten Papierbögen niedergeschrieben werden. Flip-Charts haben jedoch den Nachteil, dass die einmal gesammelten und niedergeschriebenen Informationen nicht so leicht umsortiert werden können und das Umsortieren der Informationen meist das Umblättern der einzelnen Papierbögen erfordert, was leicht zu einem Verlust an Übersichtlichkeit führen kann. Ferner verursacht der Verbrauch von Papierbögen durch Neuanschaffung zusätzliche Kosten.

Des weiteren sind Pinnwände bekannt, die aus Kork, Papp- oder Gipskarton, Filzen oder anderen weichen, teilweise porösen Materialien bestehen und in die zur Befestigung von Zetteln oder anderen Informationsträgern Nadeln beziehungsweise spitze Metallstifte hineingesteckt werden, was im Gegensatz zu den Flip-Charts ein leichteres Umsortieren der Informationen erlaubt. Oftmals sind diese Nadeln oder Metallstifte zusätzlich mit farbigen Köpfen versehen, die eine Zusammenfassung von Informationen in einzelnen Gruppen beziehungsweise eine Einordnung nach deren Wichtigkeit gestatten. Der Nachteil dieser Pinnwände ist jedoch, dass die Informationsträger nicht selbst an der Halteeinrichtung befestigbar sind und zudem das Durchstechen der Informationsträger diese beschädigen oder zerstören kann. Auch können die aus der Pinnwand herausragenden Köpfe der Nadeln oder Metallstifte als störend empfunden werden und bergen darüber hinaus ein gewisses Verletzungsrisiko, sollten sie unbemerkt aus der Pinnwand zu Boden fallen. Pinnwände besitzen weiterhin nur eine begrenzte Haltbarkeit, da insbesondere die dickeren Metallstifte in ihnen Löcher hinterlassen, die mit der Zeit zum Auflösen der Pinnwand führen.

Andere allgemein bekannte Halteeinrichtungen zur Darstellung von Sachverhalten oder Abbildungen sehen glatte Oberflächen vor, auf denen die Sachverhalte oder Abbildungen mit einem abwischbaren Stift niedergeschrieben werden können, aber auch Zettel oder Informationsträger anderer Art mittels eines Haftklebers lösbar befestigbar sind. Bestehen diese glatten Oberflächen zudem aus einem ferromagnetischen Material oder aus einem nichtmagnetischen Material in das ferromagnetische Partikel eingearbeitet sind, so können entweder allein oder aber zusätzlich zu der klebenden Befestigung auch Magnete als Halteelemente eingesetzt werden. Dazu werden diese Magnete teilweise auch mit unterschiedlichen Farben versehen, um, ähnlich wie bei den oben erwähnten farbigen Nadelköpfen, durch entsprechende Zuordnung Zusammenhänge zwischen Informationen oder deren Wichtigkeit hervorzuheben. Werden die Magnete beschriftet oder auf sonstige Art und Weise mit Informationen versehen, können sie auch selbst zur Darstellung von Sachverhalten verwendet werden. Sowohl die Verwendung eines Haftklebers als auch der Magnete erlauben bei Bedarf ein einfaches Umsortieren der Informationen. Aus der Druckschrift DE 44 03 948 A1 sind auch flächige Halteeinrichtungen bekannt, die einen Präsentationsbereich mit glatter Oberfläche für Haftzettel aufweisen und zusätzlich mit einem magnetischen Rand oder Rahmen versehen sind. Die Druckschrift DE 296 12 661 U1 dagegen offenbart eine Kombinationen aus einer Pinnwand mit einer Magnettafel.

Der Nachteil der Verwendung von Haftklebern ist jedoch, dass mit der Zeit durch chemische Reaktionen, Strahlung oder sich an den Kleber anhaftende Staub- und Schmutzpartikel die Haftkraft des Klebers nachlässt. Eine permanente Verwendung derselben Informationsträger beziehungsweise Darstellungselemente ist daher ausgeschlossen. Bei Magneten dagegen kann je nach Ausführung die Haftkraft, das heißt die Magnetisierung, durch Erwärmung oder stoßartige Erschütterung teilweise verloren gehen. Zudem nimmt die Kraft zwischen Magnet und Magnettafel quadratisch mit der Entfernung ab, so dass die Dicke von zu halternden Gegenständen begrenzt ist. Sind die Magnete nicht selbst Darstellungselemente, sondern werden sie nur, wie in der überwiegenden Anzahl der Fälle, zur Halterung von Informationsträgern verwendet, können durch sie die zu vermittelnden Informationen verdeckt werden. Als einzelne Darstellungselemente haben sie den Nachteil, dass sie aufgrund der gegenseitigen Abstoßung nicht eng aneinanderstoßend einen aus einzelnen Teilelementen bestehenden, größeren Sachverhalt darstellen können. Auch eine eventuell gewünschte räumliche Darstellung von Sachverhalten ist durch die relativ hohe Eigenmasse der Magnete nur sehr begrenzt möglich.

In Druckschrift DE 296 20 139 U1 wird ein weiteres System zur Befestigung von Informationen beziehungsweise von Gegenständen an flächigen Halteeinrichtungen beschrieben. An einer Schlaufenmatte sollen dazu Halteelemente wie Klemmvorrichtungen, Haken, Metallstifte oder Behältnisse zur Aufnahme von Schreibmaterial, die auf ihrer Rückseite Kletthäkchen besitzen, lösbar gehaltert werden. Mittels der genannten Halteelemente werden dann die zu präsentierenden Informationen oder Gegenstände an der flächigen Halteeinrichtung befestigt. Allerdings ist von solchen Klettsystemen bekannt, dass sie sich gern mit Staub oder Fasern zusetzen und so die Wirksamkeit ihrer Halteeigenschaften mit der Zeit reduziert wird.

Es zeigt sich also, dass die oben genannten und dem Stand der Technik nach bekannten Halterungselemente insbesondere den Nachteil aufweisen, dass mit ihnen eine langdauernde Verwendung als immer wieder lösbare und beliebig wieder zusammenstellbare Darstellungselemente zur Präsentation der unterschiedlichsten Sachverhalte nur eingeschränkt möglich ist.

Auch Vorrichtungen und Verfahren zur Darstellung von zwei- oder dreidimensionalen Abbildungen aus zusammenfügbaren Teilabbildungen wie zum Beispiel flächige, zweidimensionale, aber auch dreidimensionale Puzzles sind seit längerem bekannt. Der Nachteil dieser meist auf einem Trägerkörper aus Pappe oder auch aus Metall aufgebrachten, aus kleinen Teilstücken bestehenden Abbildungen ist jedoch, dass sie, um über einen längeren Zeitraum erhalten zu bleiben, auf einem zusätzlichen Trägerkörper fixiert, in der Regel verklebt werden müssen. Auch sind die Kanten der kleinteiligen Darstellungselemente oft nicht besonders exakt gearbeitet, so dass die aus den Teilbildern zusammengesetzte Abbildung eine zusätzliche Struktur aufweist, die den Gesamteindruck der Abbildung stören kann. Darüber hinaus kann es insbesondere nach mehrmaligem Auseinandernehmen und Wiederzusammensetzen der Abbildungen vorkommen, dass sich die Teilbilder von ihren Trägerkörpern teilweise ablösen, so dass mit der Zeit ein optisch ungünstiger Eindruck des Gesamtbildes entstehen kann.

Bekannt sind auch Kunststoffelemente, die zusammengesetzt dreidimensionale Strukturen ergeben. Hier sei zum Beispiel auf die LEGO^{®}-Bausteine verwiesen, mit denen vielfältige Konstruktionen gestaltet werden können. Auch wenn bei diesem oder ähnlichen Systemen einzelne Bausteine zu einem Trägerkörper für aufgeklebte oder aufgedruckte Bildelemente zusammen gesetzt werden können, so sind diese nicht dazu gedacht, in einem größeren Zusammenhang einen Sachverhalt darzustellen beziehungsweise eine aus Teilbildern zusammengesetzte, größere Abbildung zu generieren.

Aufgabe der hier vorliegenden Erfindung ist es daher ein verbessertes Darstellungselement zur Verfügung zu stellen.

Nach einem ersten Aspekt der Erfindung löst diese Aufgabe, ein quaderförmiges Darstellungselement mit mindestens einer Kontaktfläche mit einer makroskopischen Struktur und glatten Seitenflächen und/oder einer glatten Deckfläche, die bedruckt ist, wobei das quaderförmige Darstellungselement einen Kantenradius von höchstens 0,5 mm, vorzugsweise von höchstens 0,2 mm, aufweist.

Dies hat den Vorteil, dass so mehrere nebeneinander liegende Darstellungselemente bedruckt werden können, ohne dass die Farbe wie in einen Trichter zwischen die quaderförmigen Darstellungselemente fließt. Gleichzeitig ist bei der Gestaltung des Kantenradius jedoch zu berücksichtigen, dass die Kanten nicht zu scharf werden, sodass der Benutzer sich nicht an den Kanten verletzt. Dies ist insbesondere zu berücksichtigen, wenn die quaderförmigen Darstellungselemente für Kinder zum Spielen dienen sollen. In diesem Fall ist ein Mittelweg zwischen der Verletzungsgefahr und der Bedruckfähigkeit anzustreben.

Weiterhin soll die mit dem Zeichnungselement versehene Deckfläche und/oder mindestens eine in einem vorzugsweise rechten Winkel zu der Grundfläche und/oder Deckfläche angeordnete Seitenfläche des Quaders glatt sein. Durch häufiges Anfassen, wie dies beim Auf- oder Umbau der darzustellenden Sachverhalte oder Abbildungen geschieht, und durch den allgegenwärtigen Staub in der Umgebungsluft können die Darstellungselemente mit der Zeit verschmutzen. Für deren Reinigung sind daher glatte Oberflächen vorteilhaft. Auch zum Beschriften oder Bedrucken der Darstellungselemente, sei es auf manuellem oder maschinellem Wege, werden glatte Oberflächen in der Regel bevorzugt.

Glatte Oberflächen erlauben es zudem, dass die Seitenflächen benachbarter Darstellungselemente miteinander in flächigen Kontakt bringbar sind. Dadurch kann man einen lückenlosen Aufbau des darzustellenden Sachverhaltes, insbesondere aber auch eine aus mehreren Teilbildern fugenlos zusammengesetzte Abbildung herstellen. Dies erleichtert die Erkennbarkeit des darzustellenden Sachverhaltes, vor allem erreicht man jedoch, dass die zusammengesetzte Abbildung als ein einziges, zusammenhängendes Bild erkannt wird.

Vorteilhafterweise ist ein Teil des Kantenradius bedruckt. Dadurch wird die Darstellung größerer zusammenhängender Sachverhalte über die Grenzen des einzelnen Darstellungselements hinaus möglich, ohne dass weiße Linien entlang der Kanten des Darstellungselements den Gesamteindruck stören. Zudem erleichtert dies auch das Bedrucken der Darstellungselemente, da ein kontinuierliches Bedrucken mehrere Darstellungselemente möglich wird.

Von Vorteil ist weiter, wenn das quaderförmige Darstellungselement aus Kunststoff ist. Die Darstellungselemente können Kunststoffspritzgussteile oder Kunststofftiefziehteile sein, die vorzugsweise aus ABS-Kunststoff bestehen. Kunststoff bietet sich aufgrund seiner guten Verarbeitbarkeit, Formbarkeit und seiner hohen Stabilität bei geringem Eigengewicht als Material für die Darstellungselemente an. Speziell ABS (Acrylnitril-Butadien-Styrol-Copolymerisat) ist wegen seiner vergleichsweise hohen Schlagfähigkeit bei gleichzeitig hoher Oberflächenhärte hierfür besonders geeignet.

Das quaderförmige Darstellungselement kann an seiner Kontaktfläche Erhebungen oder Vertiefungen aufweisen, wobei die Erhebungen und Vertiefungen ineinander greifen. Eine solche klemmende Halterung der Darstellungselemente aneinander oder an einer flächigen Halteeinrichtung hat den Vorteil, dass sie neben der lösbaren Befestigungsseite und der Möglichkeit diese Befestigung beliebig oft wieder herzustellen, auch eine langandauernde Befestigung erlaubt, da Umwelteinflüsse eine derartige Befestigung nicht beeinträchtigen können. Auch gestattet eine klemmende Verbindung für die Darstellungselemente eine beliebige Kombinierbarkeit, da sie nicht, wie zum Beispiel Magnete, technisch bedingt grundsätzlich einen Abstand zueinander besitzen.

Die Erhebungen und Vertiefungen können insbesondere zylinderförmig sein. Flache Zylinder als Haltungselemente für eine klemmende Verbindung bieten den Vorteil, dass man mit ihnen Darstellungselemente haltern kann, deren Klemmbereich sowohl als komplementäre zylindrische Vertiefung als auch eckige Vertiefung ausgebildet ist, die im Querschnitt die Form eines Polygons besitzt. Im letzten Teil berühren die flachen Zylinder die Wände der Vertiefung im Darstellungselement nur an den Mittelsenkrechten der Polygonseiten.

Nach einem weiteren Aspekt umfasst die Erfindung eine Vorrichtung zur Darstellung von Sachverhalten mit einer flächigen Halteeinrichtung und quaderförmigen Darstellungselementen mit mindestens einer Kontaktfläche mit einer makroskopischen Struktur und mit glatten Seitenflächen (7) und/oder einer glatten Deckfläche, die bedruckt ist, wobei die quaderförmigen Darstellungselemente auf der Halteeinrichtung reversibel in eine Vielzahl möglicher räumlicher Anordnung zueinander befestigt sind, wobei die die bedruckten Flächen auf den Seiten- oder Deckflächen sich zu einer Abbildung oder zur Darstellung eines Sachverhaltes zusammensetzen.

Auch die Haltevorrichtung kann aus Kunststoff sein. Die Haltevorrichtung kann weiter plattenförmig sein und die Oberfläche kann mit einer Vielzahl rasterförmig angeordneter Erhebungen, insbesondere ebenfalls in Form von flachen Zylindern versehen sein, welche in die taschenförmigen Vertiefungen in dem mindestens einen Kontaktbereich des Darstellungselements eingreifen.

Vorteilhafterweise ist die Halteeinrichtung aus mehreren nebeneinander angeordneten und lösbar miteinander verbundenen Teilen zusammengesetzt, wobei alle Teile eine zusammenhängende und in einer gemeinsamen Ebene liegende Oberfläche der Halteeinrichtung bilden. Durch die Ausbildung der Halteeinrichtung als aus mehreren Teilelementen zusammensetzbares Element kann die Größe der Halteeinrichtung schnell variiert und so den jeweiligen Bedürfnissen und Gegebenheiten angepasst werden, was für einen flexiblen Einsatz von großer Bedeutung ist.

Die Halteeinrichtung kann dazu plattenförmig, insbesondere in Form einer Tafel ausgebildet sein, deren Breite mindestens 50 cm, vorzugsweise mindestens 70 cm und deren Höhe mindestens 70 cm, vorzugsweise mindestens 100 cm beträgt. Diese Maße sind optimale Größen sowohl für die Präsentation von Sachverhalten, insbesondere wenn die Haltevorrichtung an einer Wand oder einem Gestell befestigt ist und sich in einem gewissen Abstand zum Betrachter befindet, als auch für die Handhabbarkeit und den Transport der Halteeinrichtung.

Um die Handhabbarkeit, das Transportieren und Verstauen der Halteeinrichtung weiter zu erleichtern, ist in einer weiteren speziellen Ausführungsform die Halteeinrichtung flexibel, insbesondere zu einer Rolle aufwickelbar gestaltet, wobei die patrizenförmigen Erhebungen oder die matrizenförmigen Vertiefungen der Oberfläche der Halteeinrichtung in zueinander parallelen Reihen angeordnet sind und wobei ein zwischen jeweils benachbarten Reihen von Erhebungen oder Vertiefungen angeordneter Verbindungsbereich elastisch biegbar ist.

Bei einer rechteckigen Halteeinrichtung ist es sinnvoll, auch die Darstellungselemente im Querschnitt rechteckig und räumlich quaderförmig zu gestalten, um eine optimale Ausnutzung der Oberfläche der Halteeinrichtung erreichen zu können. Die dadurch entstehende ebenfalls rechteckige Deckfläche bietet dann den größtmöglichen Platz zur Darstellung von Zeichnungselementen.

Ist der darzustellende Sachverhalt sehr komplex und benötigt daher zur Visualisierung eine entsprechende Fläche, so ist es vorteilhaft, dass die Darstellungselemente so an der Halteeinrichtung halterbar sind, dass die gesamte Oberfläche der Halteeinrichtung abgedeckt werden kann. Die bereits oben erwähnten glatten Oberflächen der Darstellungselemente zur Erzeugung eines flächigen Kontaktes zwischen den Darstellungselementen erleichtern diese vollflächige Abdeckung.

Eine besondere Ausführungsform sieht vor, dass ein zweites Darstellungselement ausschließlich an einem oder mehreren bereits an der Halteeinrichtung gehalterten ersten Darstellungselement gehaltert wird, wobei das erste Darstellungselement mittelbar oder unmittelbar an der Halteeinrichtung gehaltert werden kann. Die Halterung eines Darstellungselementes auf einem anderen wird bewirkt dabei, dass das zweite Darstellungselement weiter von der Oberfläche der Halteeinrichtung entfernt ist als das erste Darstellungselement. Hierdurch wird eine Dreidimensionalität erzeugt, durch die zusätzliche Visualisierungseffekte geschaffen werden können, die sowohl eine stärkere Veranschaulichung von Sachverhalten erlauben, als auch dreidimensionale Abbildungen ermöglichen.

Um einen solchen Aufbau zu erreichen und um gleichzeitig dafür Sorge zu tragen, dass auch ein zweites, von der Oberfläche der Halteeinrichtung weiter entferntes Darstellungselement direkt an dieser Oberfläche gehaltert werden kann, sollen quaderförmige Darstellungselemente an einer der Grundfläche des Quaders gegenüberliegenden Deckfläche mit Erhebungen und/oder Vertiefungen versehen sein, die mit Erhebungen und/oder Vertiefungen an der Oberfläche der Halteeinrichtung übereinstimmen.

Zusätzlich sollen quaderförmige Darstellungselemente an mindestens einer im rechten Winkel zu der Oberfläche der Halteeinrichtung ausgerichteten Seitenfläche mit mindestens einem Zeichnungselement versehen werden. Durch die Nutzung der Seitenflächen der Darstellungselemente als Informations- oder Bildträger kann zum einen die Informationsdichte erhöht werden, zum anderen erlaubt sie zum Beispiel durch einfaches Drehen der Darstellungselemente eine schnelle Änderung des Sachverhaltes, ohne neue Darstellungselemente verwenden zu müssen. Dies vergrößert in hohem Maße die Vielseitigkeit der flächigen Halteeinrichtung.

Ein weitere Aspekt der Erfindung betrifft eine Mauer aus mehreren Darstellungselementen mit mindestens einer Kontaktfläche mit einer makroskopischen Struktur und mit glatten Seitenflächen, die bedruckt sind, wobei die Darstellungselemente reversibel in einer Mehrzahl möglicher ordentlicher Anordnungen zueinander angeordnet werden können und sich die bedruckten Seitenflächen auf einer Seitenfläche der Mauer zu einer Abbildung zusammensetzen, wobei sich auf der bedruckten Fläche eines Darstellungselements am Übergang von einer Farbe zu einer anderen Farbe eine Linie bildet, die sich auf der bedruckten Fläche auf dem benachbarten Darstellungselement fortsetzt. Werden die Seitenflächen der Darstellungselemente mit Teilbildern versehen, so ergeben diese nur in einer einzigen Anordnung der Darstellungselemente relativ zueinander eine gewünschte größere Abbildung, die sich über die Kanten der einzelnen Darstellungselemente hinaus fortsetzt. So lassen sich auch ohne Verwendung der Halteeinrichtung zwei- oder sogar dreidimensionale Bilder erzeugen.

Die Erfindung betrifft weiter einen Quader aus mindestens vier quaderförmigen Darstellungselementen, wobei die Darstellungselemente jeweils mindestens eine Kontaktfläche, vier glatte Seitenflächen und/oder eine Deckfläche die bedruckt ist, aufweisen, wobei mindestens zwei der quaderförmigen Darstellungselemente auch auf der Deckseite glatt und bedruckt sind, wobei die Darstellungselemente reversibel in einer Mehrzahl möglicher räumlicher Anordnungen zueinander angeordnet werden können. Auf diese Weise können auch eine größere gerade Anzahl von Darstellungselementen zu einem Quader zusammengesetzt werden. Dies ist von Vorteil, da alle fünf Quaderseiten bis auf die Standfläche eine glatte Oberfläche aufweisen und mit Zeichenelementen versehen sind.

Vorteilhafterweise ist die Länge der Kante der Kanten der quaderförmigen Darstellungselemente ein geradzahliges Vielfaches der Breite der Kanten der quaderförmigen Darstellungselemente. Dadurch können die Darstellungselemente überkreuzt verbunden werden und bilden einen Quader.

Vorteilhafterweise setzen sich die bedruckten Seiten- und Deckflächen der quaderförmigen Darstellungselemente aus fünf Seitenflächen des zusammengesetzten Quaders jeweils zu einer Abbildung zusammen. So ist es möglich aus den verschiedenen Zeichnungselementen über die einzelnen Seitenflächen der quaderförmigen Darstellungselemente hinaus eine größere zusammenhängende Darstellung zu erreichen. Diese zieht sich dann über alle glatten Seitenflächen des Quaders, das heißt über alle Flächen bis auf die Standfläche. Auch hier kann sich auf der bedruckten Fläche eines Darstellungselements am Übergang von einer Farbe zu einer anderen Farbe eine Linie bilden, die sich auf der bedruckten Fläche auf dem benachbarten Darstellungselement fortsetzt.

Weiter können die quaderförmigen Darstellungselemente auch zu einem weiteren Quader aus mehreren oder allen Darstellungselementen zusammensetzbar sein, der die Seitenlänge und die Breite eines quaderförmigen Darstellungselements aufweist und bei dem die Zeichnungselemente auf einer Seite des Quaders sich zu einer Abbildung zusammensetzen. Dies hat den Vorteil, dass der so aus mehreren oder allen quaderförmigen Darstellungselementen zusammengesetzte Quader auf seiner Seite über die Grenzen der quaderförmigen Darstellungselemente hinaus eine zusammenhängende größere Abbildung aufweist.

Von Vorteil ist, wenn die bedruckten Seiten- und Deckflächen der quaderförmigen Darstellungselemente sich auf fünf Seitenflächen des zusammengesetzten Quaders zu einer ersten Abbildung zusammensetzen und diese reversibel zu zumindest einem zweiten Quader zusammensetzbar ist, wobei dieser die Seitenlänge und die Breite eines quaderförmigen Darstellungselementes aufweist und die bedruckten Seitenflächen der quaderförmigen Darstellungselemente sich auf der Seitenfläche des zweiten Quaders sich zu einer zweite Abbildung zusammensetzen, wobei die erste und die zweite Abbildung keine bedruckten Seitenflächen gemeinsam haben.

So ist es möglich, für die zwei Zusammensetzungsvarianten unterschiedliche Abbildungen zu generieren. Insbesondere ist die zweite Abbildung beim zusammengesetzten ersten Quader nirgends sichtbar und wird erst überraschend freigelegt, wenn der zweite Quader neu zusammengesetzt wird.

Weiter können die quaderförmigen Darstellungselemente zu zumindest zwei weiteren Quadern zusammensetzbar sein und die bedruckten Seitenflächen der quaderförmigen Dastellungselemente können sich auf jeweils einer Seitefläche der weiteren Quader zu einer weiteren Abbildung zusammensetzen. So ist es möglich, aus zwei Quadern, wenn diese an ihrer glatten Seitenfläche zusammengeschoben werden, eine größere zusammenhängende Abbildung zusammenzusetzen, die sich nicht nur über die Grenzen der quaderförmigen Darstellungselemente hinauserstreckt sondern über die Grenzen der Seitenflächen eines Quaders hinaus erstreckt. So kann eine zusammenhängende Abbildung mit der Breite der doppelten Seitenlänge der einzelnen Quader erzeugt werden.

Ein weiterer Aspekt der Erfindung betrifft ein Verfahren zum Herstellen von quaderförmigen Darstellungselementen (3, 4), wobei mehrere abstandslos nebeneinander liegende quaderförmige Darstellungselemente (3, 4) gleichzeitig bedruckt werden. Dies hat den Vorteil, dass mehrere Teile als Mauer oder Platte gleichzeitig und fortlaufend bedruckt werden können.

Vorteilhafterweise kann ein Farbflächenelement der Abbildung, mit der bedruckt wird, sich über mehrere quaderförmige Darstellungselemente (3, 4) erstrecken. So können die quaderförmigen Darstellungselemente vollflächig mit einer über Quaderkanten hinweggehenden Abbildung bedruckt werden.

Darüber hinaus ist die Verwendung einer solchen plattenförmigen Halteeinrichtung und entsprechender quaderförmiger Darstellungselemente vorgesehen, wobei die Darstellungselemente in einem von einer Grundfläche des Quaders gebildeten Kontaktbereich mit Taschen versehen sind, welche mit zylindrischen Erhebungen an eine Oberfläche der Halteeinrichtung klemmend koppelbar sind, und wobei auf den Darstellungselementen jeweils mindestens ein Zeichen, Wort, Buchstabe, Symbol, eine Zahl oder ein Bildelement dargestellt ist, zur Darstellung von Sachverhalten oder Abbildungen, insbesondere von Plänen, Diagrammen und Schaubildern, die aus einer Mehrzahl von Zeichen, Wörtern, Buchstaben, Symbolen, Zahlen oder Teilbildern in einer bestimmten räumlichen Anordnung zueinander gebildet sind. Mit einer solchen plattenartigen Halteeinrichtung und/oder mit den quaderförmigen Darstellungselementen lassen sich die zu präsentierenden Sachverhalte beziehungsweise die Abbildungen auf einfachem Wege darstellen und bei Bedarf leicht und schnell umgruppieren oder abändern.

Schließlich soll eine 2- oder 3-dimensionale Abbildung so aus quaderförmigen Darstellungselementen gebildet werden, dass sich die Abbildung auf einer Oberfläche eines aus den Darstellungselementen zusammengesetzten Trägerkörpers befindet. Die Abbildung kann dabei aus einer Mehrzahl von Zeichnungselementen wie zum Beispiel Zeichen, Wörtern, Buchstaben, Zahlen, Symbolen, Bildern oder Teilbildern bestehen, die jeweils in einer bestimmten räumlichen Anordnung zueinander positioniert werden können. Die Darstellungselemente , auf denen das jeweils mindestens eine Zeichnungselement dargestellt sein soll, können in einer Vielzahl möglicher räumlicher Anordnungen zueinander angeordnet werden, wobei die Darstellung einer Abbildung durch Veränderung der Anordnung der Darstellungselemente zueinander beliebig oft aufhebbar und in anderer räumlicher Anordnung zueinander wieder zusammenstellbar ist. Die Darstellungselemente sollen dabei klemmend an einer flächigen Halteeinrichtung und/oder klemmend aneinander gehaltert werden können, wobei die klemmende Halterung in einem Kontaktbereich der Darstellungselemente durch mindestens eine patrizenförmige Erhebung oder eine matrizenförmige Vertiefung eines Darstellungselementes oder einer Oberfläche der Halteeinrichtung erfolgen kann, indem die patrizenförmige Erhebung eines Darstellungselementes oder der Oberfläche der Halteeinrichtung in die matrizenförmige Vertiefung der Oberfläche der Halteeinrichtung oder eines anderen Darstellungselementes eingreift.

Im folgenden wird die Erfindung anhand der in den Zeichnungen dargestellten Ausführungsbeispiele näher erläutert.

Es zeigen:
- Figur 1:: eine Draufsicht auf eine flächige Halteeinrichtung zur Darstel- lung von Sachverhalten mittels Darstellungselementen,
- Figur 2:: einen Schnitt durch eine flächige Halteeinrichtung gemäß Fi- gur 1,
- Figur 3:: ein quaderförmiges Darstellungselement für die flächige Hal- teeinrichtung,
- Figur 4:: ein quaderförmiges Darstellungselement gemäß Figur 3 um 90° gekippt,
- Figur 5:: ein zweites, quaderförmiges Darstellungselement von unten gesehen,
- Figur 6:: einen Schnitt durch das zweite, quaderförmige Darstellungs- element gemäß Figur 5,
- Figur 7:: ein quaderförmiges Darstellungselement zur Halterung von weiteren quaderförmigen Darstellungselementen,
- Figur 8:: eine aus auf Seitenflächen von Darstellungselementen ge- druckten Teilbildern zusammengesetzte Abbildung,
- Figur 9:: einen aus quaderförmigen Darstellungselementen zusammen- gesetzten Quader mit einer Abbildung und
- Figur 10:: zwei aus quaderförmigen Darstellungselementen zusammen- gesetzte Quader mit einer Abbildung.

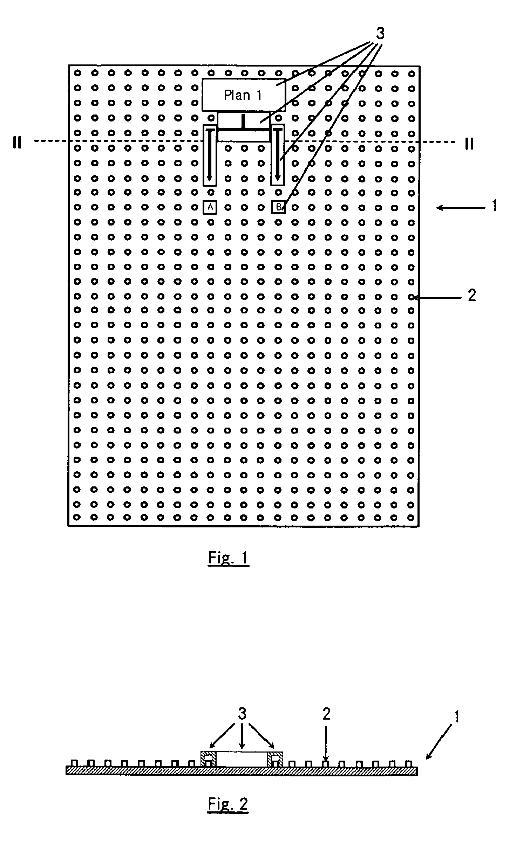

In Figur 1 wird eine flächige Halteeinrichtung 1 zur Präsentation von Sachverhalten gezeigt. Die aus ABS-Kunststoff bestehende Halteeinrichtung 1 besitzt Erhebungen 2 in Form von flachen Zylindern, die in festen, regelmäßigen Abständen zueinander in Zeilen und Spalten angeordnet sind, so dass sich ein rasterförmiges Muster mit den zylinderförmigen Erhebungen 2 an den Schnittpunkten der "Rasterlinien" ergibt. An den zylinderförmigen Erhebungen 2 sind Darstellungselemente 3 klemmend gehaltert, mit denen die zu präsentierenden Sachverhalte in Form von Zeichen, Symbolen oder Bildelementen aus Einzelteilen zusammengefügt dargestellt werden können.

Figur 2 zeigt einen Schnitt durch das flächige Halteelement 1 an der in Figur 1 mit der gestrichelten Linie II-II markierten Stelle. Zu erkennen sind die zylinderförmigen Erhebungen 2, an denen die Darstellungselemente 3 klemmend befestigt sind.

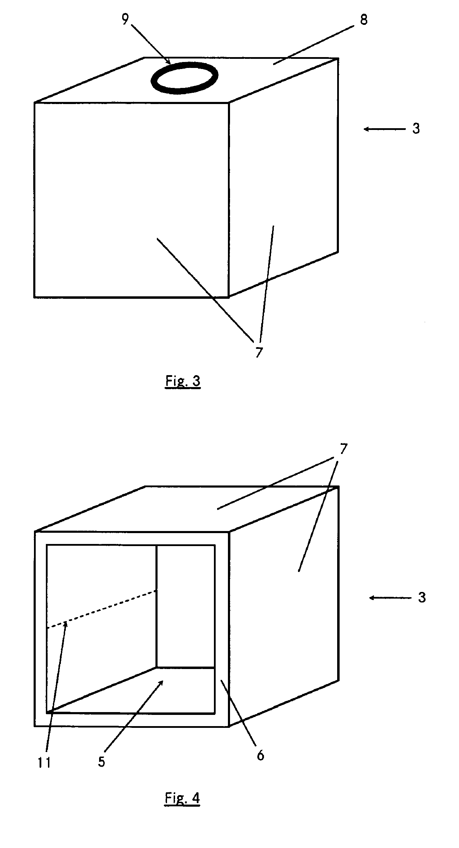

Diese Darstellungselemente 3 besitzen jeweils, wie in Figur 3 dargestellt, Seitenflächen 7 und eine Deckfläche 8, deren Oberflächen glatt ausgeformt sind. Die Deckfläche 8 der Darstellungselemente 3 kann bedruckt sein, beispielsweise können Zeichnungselemente 9 in Form von Zeichen, Symbolen, Bildelementen, Buchstaben, Wörtern oder Zahlen angebracht werden. Dies kann zum Beispiel maschinell vorgefertigt durch Bedrucken oder Bekleben mit einer bedruckten Folie, aber auch manuell durch eigenhändiges Beschriften geschehen. Möglich ist auch, dass die manuelle Beschriftung abwischbar ausgebildet wird, so dass neben vorgefertigten, mit Zeichnungselementen 9 bedruckten Darstellungselementen 3 eine gewisse Anzahl an "Blanko"-Darstellungselementen 3 vorliegt, die je nach Situation veränderbar gestaltet werden können. Dies ermöglicht den Einsatz einer großen Variationsbreite von unterschiedlichsten und individuellen Darstellungselementen 3.

Durch die glatten Oberflächen der Seitenflächen 7 der Darstellungselemente 3 können diese zudem, wie auch aus den Figuren 1 und 2 zu entnehmen ist, in engem Kontakt zueinander an dem Halteelement 1 befestigt werden, so dass ein lückenloses Schaubild aus den verschiedenen Zeichnungselementen erzeugt werden kann.

Die Befestigung der Darstellungselemente 3 an den zylinderförmigen Erhebungen 2 der Halteeinrichtung 1 erfolgt, wie schon erwähnt, klemmend. Dazu besitzen, wie in Figur 4 gezeigt, die Darstellungselemente 3 in einem Kontaktbereich 6 eine taschenförmige Vertiefung 5, in die die zylinderförmigen Erhebungen 2 der Halteeinrichtung 1 hineinragen (s. auch Figur 2). Die Ränder der zylinderförmigen Erhebungen 2 berühren dabei die Innenflächen der taschenförmigen Vertiefung 5 jeweils nur in einem sehr schmalen Bereich an den Mittelsenkrechten 11 der Innenflächen der taschenförmigen Vertiefungen 5.

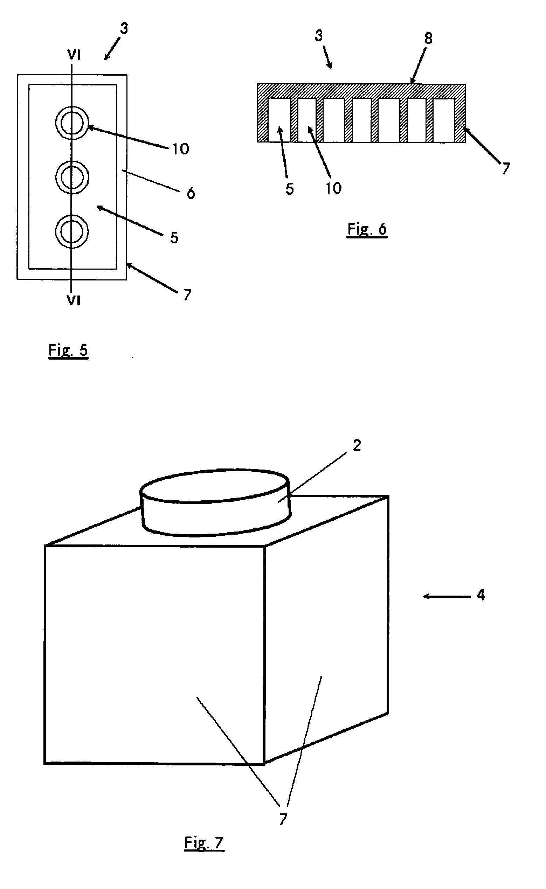

Sind die Darstellungselemente 3, wie in Figur 5 gezeigt, größer, so dass sie an mehreren der zylinderförmigen Erhebungen 2 der Halteeinrichtung 1 befestigt werden, so findet der klemmende Kontakt zum einen an den Innenwänden der taschenförmigen Vertiefungen 5, zum anderen an den Außenwänden von in den taschenförmigen Vertiefungen 5 befindlichen Innenzylindern 10 statt. Daher gibt es bei dieser Ausführungsform der Darstellungselemente 3 nur drei Kontaktstellen anstelle von vieren, wie bei den in Figur 4 gezeigten Darstellungselementen 3. Figur 6 zeigt einen Schnitt durch das in Figur 5 dargestellte Darstellungselement 3 an der Linie VI-VI.

Eine weitere Ausgestaltungsform der Darstellungselemente 3 wird in Figur 7 präsentiert. Anstelle von Zeichnungselementen 9 besitzen diese Darstellungselemente 4 auf der Deckfläche 8 anstelle einer glatten Oberfläche zylinderförmige Erhebungen 2, wie sie sich auch auf dem flächigen Halteelement 1 befinden. Mit diesen Darstellungselementen 4 lassen sich die Darstellungselemente 3 aus der ersten Ebene direkt am flächigen Halteelement 1 in eine zweite Ebene bringen, indem sie auf den Darstellungselementen 4 klemmend befestigt werden. So lassen sich die Darstellungselemente 3 für besondere Darstellungseffekte hervorheben und es wird zudem die Möglichkeit die Nutzung der Seitenflächen 7 der Darstellungselemente 3 geschaffen, womit zusätzliche Varianten zur Darstellung von Sachverhalten geboten werden.

Durch die Ausgestaltung der flächigen Halteeinrichtung 1 und der Darstellungselemente 3 und 4 genau in der oben dargestellten Art und Weise wird der positive Nebeneffekt erzielt, dass auch Bausteine des bekannten und weit verbreiteten LEGO^{®}-Systems verwendet werden können. Damit erhöht sich die Anzahl und die Variationsbreite der Darstellungsmöglichkeiten beträchtlich.

Eine besondere Ausführungsform der flächigen Halteeinrichtung 1 besteht darin, dass sie zusammengerollt werden kann und sich so leicht transportieren und einfach verstauen lässt. Dafür ist der Bereich zwischen den zylinderförmigen Erhebungen 2 auf der flächigen Halteeinrichtung 1 aus einem flexiblen Material geschaffen, das in einer gewissen Bandbreite Durchbiegungen erlaubt und es so gestattet, die flächige Halteeinrichtung 1 zu einer Rolle aufzuwickeln. Zusätzlich soll die flächige Halteeinrichtung so ausgestaltet sein (in den Figuren 1 - 8 nicht dargestellt), dass sie auf einfachem Wege durch Kombination mit einer oder mehrerer weiterer Halteeinrichtungen 1, die über Kopplungselemente lösbar miteinander verbunden werden können, erweiterbar ist, um so auch die Größe der Halteeinrichtung 1 der jeweiligen gegebenen Situation anpassen zu können.

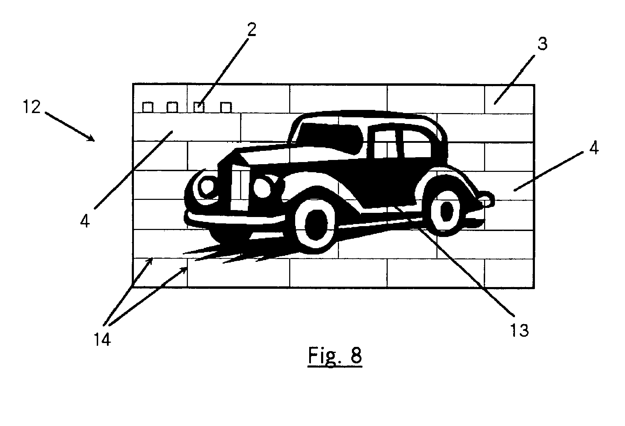

Des Weiteren zeigt Figur 8 einen aus mehreren quaderförmigen Darstellungselementen 3 und 4 zusammengesetzten Trägerkörper 12, wobei einige der Darstellungselemente 3, 4 jeweils auf einer ihrer langen Seitenflächen 7 mit Teilbildern beziehungsweise Bildausschnitten versehen sind, die auf genau eine Weise zusammengesetzt eine Abbildung 13 ergeben. Die Abbildung 13 erstreckt sich somit über Kanten 14, die benachbarte aus den Seitenflächen 7 der Darstellungselemente 3, 4 bestehende Teilflächen des Trägerkörpers 12 begrenzen, hinweg. Um ein optisch gefälliges Gesamtbild zu erzielen, besteht bei dem Trägerkörper 12 die oberste Lage seiner Darstellungselemente 3, 4 nur aus den wie in den Figuren 5 und 6 beispielhaft gezeigten Darstellungselementen 3, denen für eine glatte Deckfläche 8 die zylindrischen Erhebungen 2 der Darstellungselemente 4.

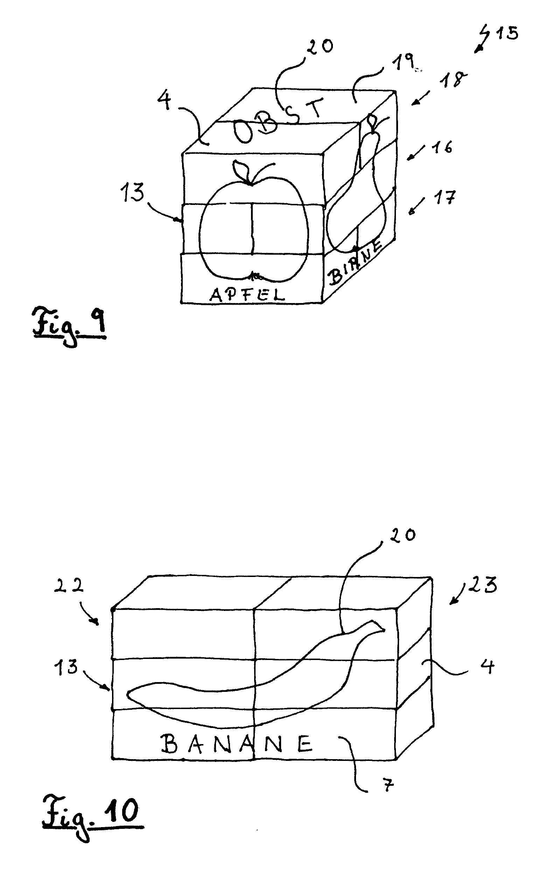

Figur 9 zeigt einen aus sechs quaderförmigen Darstellungselementen 4 zusammengesetzten Quader 15. Dabei sind die in der mittleren Reihe 16 angebrachten Darstellungselemente quer zu denen in der Bodenreihe 17 und der oberen Reihe 18 angebracht. Die Darstellungselemente in der oberen Reihe 18 weisen zudem eine glatte Deckseite 19, die bedruckt ist. Die bedruckten glatten Flächen 20 auf jedem der quaderförmigen Darstellungselemente setzen sich auf jeder der Seitenflächen des Quaders zu einer Abbildung 13 zusammen. So entstehen fünf Abbildungen auf den Seitenflächen und der Oberseite des Quaders.

In Figur 10 sind die Darstellungselemente 3 zu zwei Quadern 22, 23 aus jeweils drei quaderförmigen Darstellungselementen 4 zusammengesetzt. Auch diese weisen bedruckte Seitenflächen 20 auf. Werden die quaderförmigen Darstellungselemente in einer bestimmten Weise zusammengesetzt, fügen sich die bedruckten Seitenflächen 20 über die einzelnen Darstellungselemente zu zwei weiteren Teilabbildungen und auch über die zwei zusammen geschobenen Quader hinaus zu einer Gesamtabbildung 13 zusammen.

Insgesamt entstehen so 7 Abbildungen auf den Seitenflächen der Quader in Figur 9 und 10, von denen sich zwei auf den Seitenflächen der in Figur 10 dargestellten Zusammensetzungsvariante sich durch Zusammenschieben zu einer größeren Abbildung zusammenfügen.

### Bezugszeichenliste

- 1: Halteeinrichtung
- 2: Erhebung
- 3: Darstellungselement
- 4: Darstellungselement
- 5: Vertiefung
- 6: Kontaktbereich
- 7: Seitenfläche
- 8: Deckfläche
- 9: Zeichnungselement
- 10: innerer Bereich
- 11: Mittelsenkrechte
- 12: Trägerkörper
- 13: Abbildung
- 14: Kante
- 15: Quader
- 16: mittlere Reihe des Quaders
- 17: Bodenreihe des Quaders
- 18: obere Reihe des Quaders
- 19: Deckseite
- 20: glatte bedruckte Fläche

## Patentansprüche

1. Quaderförmiges Darstellungselement (3, 4) mit mindestens einer Kontaktfläche mit einer makroskopischen Struktur und mit glatten Seitenflächen (7) und/oder einer glatten Deckfläche, die bedruckt ist, **dadurch gekennzeichnet, dass** das quaderförmige Darstellungselement (3, 4) einen Kantenradius von höchstens 0,5 mm, vorzugsweise höchstens 0,2 mm aufweist.

2. Quaderförmiges Darstellungselement (3, 4) nach Anspruch 1, **dadurch gekennzeichnet, dass** ein Teil des Kantenradius bedruckt ist.

3. Quaderförmiges Darstellungselement (3, 4) nach Anspruch 1 oder 2, **dadurch gekennzeichnet, dass** es an seiner Kontaktfläche Erhebungen oder Vertiefungen aufweist, wobei die Erhebungen und Vertiefungen ineinander greifen.

4. Vorrichtung zur Darstellung von Sachverhalten mit einer flächigen Halteeinrichtung (1) und quaderförmigen Darstellungselementen (3, 4) mit mindestens einer Kontaktfläche mit einer makroskopischen Struktur und mit glatten Seitenflächen (7) und/oder einer glatten Deckfläche, die bedruckt ist, insbesondere nach einem der Ansprüche 1 bis 3, **dadurch gekennzeichnet, dass** die quaderförmigen Darstellungselente auf der Halteeinrichtung (1) reversibel in einer Vielzahl möglicher räumlicher Anordnungen zueinander befestigt sind, wobei die bedrucken Flächen auf den Seiten- oder Deckflächen zu einer Abbildung oder zur Darstellung eines Sachverhalts zusammensetzbar sind.

5. Vorrichtung nach Anspruch 4, **dadurch gekennzeichnet, dass** die Halteeinrichtung (1) flexibel, insbesondere zu einer Rolle aufwickelbar ist.

6. Mauer aus mehreren Darstellungselementen (3, 4) insbesondere nach einem der Ansprüche 1 bis 3 mit mindestens einer Kontaktfläche mit einer makroskopischen Struktur und mit glatten Seitenflächen (7), die bedruckt sind, wobei die Darstellungselemente (3, 4) reversibel in einer Mehrzahl möglicher räumlicher Anordnungen zueinander angeordnet werden können und sich die bedruckten Elemente auf einer Seitenfläche der Mauer zu einer Abbildung zusammensetzen, wobei sich auf der bedruckten Fläche eines Darstellungselements am Übergang von einer Farbe zu einer anderen Farbe eine Linie bildet, die sich auf der bedruckten Fläche auf dem benachbarten Darstellungselement fortsetzt.

7. Quader zusammengesetzt aus mindestens vier quaderförmigen Darstellungselementen (3, 4) insbesondere nach einem der Ansprüche 1 bis 3, wobei die Darstellungselemte jeweils mindestens eine Kontaktfläche mit einer makroskopischen Struktur, vier glatte Seitenflächen (7) und/oder eine Deckfläche, die bedruckt ist, aufweisen, wobei mindestens zwei der quaderförmigen Darstellungselemente auch auf der Deckfläche glatt und bedruckt sind, wobei die Darstellungselemente (3, 4) reversibel in einer Mehrzahl möglicher räumlicher Anordnungen zueinander angeordnet werden können.

8. Quader nach Anspruch 7, **dadurch gekennzeichnet, dass** die Länge der Kanten der quaderförmigen Darstellungselemente (3, 4) ein geradezahliges Vielfaches der Breite der Kanten der quaderförmigen Darstellungselemente (3, 4) ist.

9. Quader nach Anspruch 7 oder 8, **dadurch gekennzeichnet, dass** sich die bedrucken Seitenflächen der quaderförmigen Darstellungselemente (3, 4) sich auf fünf Seitenflächen des zusammengesetzten Quaders jeweils zu einer Abbildung zusammensetzen.

10. Quader nach einem der Ansprüche 7 bis 9, **dadurch gekennzeichnet, dass** die bedruckten Seiten- und Deckflächen der quaderförmigen Darstellungselemente (3, 4) sich auf fünf Seitenflächen des zusammengesetzten Quaders zu einer ersten Abbildung zusammensetzen und diese reversibel zu mindestens einem zweiten Quader zusammensetzbar sind, wobei dieser die Seitenlänge und die Breite eines quaderförmigen Darstellungselementes (3, 4) aufweist und die bredruckten Seiteflächen der quaderförmigen Darstellungselemente (3, 4) sich auf der Seitenfläche des zweiten Quaders zu einer zweiten Abbildung zusammensetzen, wobei die erste und die zweite Abbildung keine bedruckten Seitenflächen gemeinsam haben.

11. Quader nach Anspruch 10, **dadurch gekennzeichnet, dass** die quaderförmigen Darstellungselemente (3, 4) zu mindestens zwei weiteren Quadern zusammensetzbar sind und die bedruckten Seitenflächen der quaderförmigen Darstellungselemente (3, 4) sich auf den Seitenflächen der zwei weiteren Quader zu jeweils einer weiteren Abbildung zusammensetzen.

12. Verfahren zum Herstellen von quaderförmigen Darstellungselementen (3, 4), insbesondere nach einem der Ansprüche 1 bis 3, **dadurch gekennzeichnet, dass** mehrere abstandslos nebeneinander liegende quaderförmige Darstellungselemente (3, 4) gleichzeitig bedruckt werden.

13. Verfahren zum Herstellen von quaderförmigen Darstellungselementen nach Anspruch 12, **dadurch gekennzeichnet, dass** eine Farbflächenelement der Abbildung, mit der bedruckt wird, sich über mehrere quaderförmige Darstellungselemente (3, 4) erstreckt.

14. Verfahren insbesondere zur Verwendung von quaderförmigen Darstellungselementen (3, 4) nach einem der Ansprüche 1 bis 3 zur Darstellung von Sachverhalten auf einer flächigen Halteeinrichtung (1), insbesondere von Texten, Plänen, Diagrammen, Schaubildern, oder zur Erzeugung einer 2- oder 3-dimensionalen Abbildung auf einem Trägerkörper (12), wobei ein Sachverhalt oder eine Abbildung aus einer Mehrzahl von Zeichnungselementen (9) wie Zeichen, Wörtern, Buchstaben, Zahlen, Symbolen, Bildern oder Teilabbildungen o.ä., jeweils in einer bestimmten räumlichen Anordnung zueinander gebildet wird, und wobei Darstellungselemente (3, 4), auf denen jeweils mindestens ein Zeichnungselement (9) dargestellt ist, in einer Vielzahl möglicher räumlicher Anordnungen zueinander angeordnet werden und in ihrer räumlichen Anordnung einen Trägerkörper (12) bilden, wobei die Darstellung eines Sachverhalts oder einer Abbildung durch Veränderung der Anordnung der Darstellungselemente (3, 4) beliebig oft aufhebbar ist und die Darstellungselemente (3, 4) in anderen räumlichen Anordnungen zueinander wieder positionierbar sind, **dadurch gekennzeichnet, dass** die Darstellungselemente (3, 4) klemmend an einer flächigen Halteeinrichtung (1) und/oder klemmend aneinander gehaltert werden und dass in einem Kontaktbereich (6) jedes Darstellungselements (3, 4) mindestens eine patrizenförmige Erhebung (2) eines Darstellungselementes (4) oder der Oberfläche der Halteeinrichtung (1) mit mindestens einer matrizenförmigen Vertiefung (5) der Oberfläche der Halteeinrichtung (1) oder dieses oder eines anderen Darstellungselements (3, 4) in Eingriff gebracht wird.
